# FASCICULE DE BREVET EUROPEEN

(11) **EP 2 822 789 B1**
(45) Date de publication et mention de la délivrance du brevet: **29.11.2017**
(21) Numéro de dépôt: 13711093.8
(22) Date de dépôt: 05.03.2013
(51) Int. Cl.: B60H 1/00

(54) **PROCEDE DE GESTION D'UN DISPOSITIF THERMODYNAMIQUE POUR VEHICULE AUTOMOBILE, SYSTEME, PROGRAMME, SUPPORT D'ENREGISTREMENT ET VEHICULE ASSOCIE**
VERFAHREN ZUR VERWALTUNG EINER THERMODYNAMISCHEN VORRICHTUNG FÜR EIN KRAFTFAHRZEUG, SYSTEM, PROGRAMM, AUFZEICHNUNGSMEDIUM UND ZUGEHÖRIGES FAHRZEUG
METHOD FOR MANAGING A THERMODYNAMIC DEVICE FOR A MOTOR VEHICLE, SYSTEM, PROGRAM, RECORDING MEDIUM AND ASSOCIATED VEHICLE

(30) Priorité: 05.03.2012 FR 1251973
(43) Date de publication de la demande: 14.01.2015
(73) Titulaire: Renault S.A.S., 92100 Boulogne-Billancourt (FR)
(72) Inventeur: QUETANT, Eudes, F-78280 Guyancourt (FR); GOUTAL, Virginie, F-78720 La Celle Les Bordes (FR)
(86) Numéro de dépôt international: PCT/FR2013/050466
(87) Numéro de publication internationale: WO 2013/132187

(56) Documents cités:
- DE-C1- 19 935 269
- US-A- 5 481 884
- US-A1- 2003 230 106
- US-A1- 2010 186 430

## Description

### Domaine technique de l'invention

L'invention concerne le domaine de l'automobile et plus particulièrement la gestion d'un dispositif thermodynamique embarqué.

L'invention a pour objet plus particulièrement un procédé de gestion d'un dispositif thermodynamique pour véhicule automobile, notamment de type pompe à chaleur, comportant un circuit de fluide caloporteur, ledit procédé comprenant une étape de vérification initiale dans laquelle un état fonctionnel, ou un état défaillant, au niveau du circuit du fluide caloporteur est détecté en fonction d'une première mesure de pression dudit fluide et de sa comparaison à un premier seuil.

### État de la technique

Dans le domaine des véhicules automobiles, les dispositifs thermodynamiques sont utilisés notamment pour améliorer le confort du ou des passagers dans l'habitacle du véhicule.

De tels dispositifs thermodynamiques, de type pompe à chaleur, comportent un circuit de fluide caloporteur généralement associé à un compresseur pour mettre en oeuvre la circulation du fluide caloporteur du circuit. Un tel fluide permet, en fonction du mode de fonctionnement du dispositif thermodynamique associé, de chauffer, de refroidir, d'assécher l'air dans l'habitacle du véhicule, ou bien de dégivrer le dispositif lui-même.
Bien entendu, un tel dispositif thermodynamique peut être soumis à des pannes comme la perte de fluide caloporteur consécutive à une fuite, ou tout simplement un manque de fluide caloporteur dans le circuit associé. Ce genre de panne entraîne souvent la dégradation prématurée du compresseur.
Pour pallier à ce problème, il a été proposé un procédé de gestion d'un dispositif thermodynamique pour véhicule automobile, de type pompe à chaleur, comprenant une étape de vérification initiale dans laquelle un état fonctionnel, ou un état défaillant, au niveau du circuit du fluide caloporteur est détecté. Cette détection est réalisée en fonction d'une mesure de pression dudit fluide et de sa comparaison à un seuil. Le document US 2003/230106, qui est considéré comme l'art antérieur le plus proche, divulgue un procédé de gestion d'un dispositif thermodynamique suivant le préambule de la revendication 1. En fait, si la pression mesurée est inférieure au seuil, le dispositif est considéré comme étant dans un état défaillant, et si la pression mesurée est supérieure au seuil le dispositif est considéré comme étant dans un état fonctionnel. Dans l'état défaillant, le fonctionnement du dispositif thermodynamique n'est pas possible, par exemple en inhibant la mise en route de son compresseur.
Cependant, il a été constaté que dans certaines conditions un état défaillant peut être détecté alors qu'en fait aucune fuite n'est présente.

### Objet de l'invention

Le but de la présente invention est de proposer une solution permettant d'éviter la détection à tort d'un état défaillant d'un dispositif thermodynamique de type pompe à chaleur dans un véhicule automobile, et d'augmenter ainsi les probabilités de mise en route du dispositif.

A cet effet, il a été prévu que le procédé comporte, après l'étape de vérification initiale au cours de laquelle un état défaillant a été détecté, une étape de confirmation de l'état au cours de laquelle une nouvelle vérification est effectuée par réalisation d'une seconde mesure de pression et sa comparaison à un second seuil.

Selon un mode de réalisation, le fluide caloporteur est échauffé au cours de l'étape de confirmation.

Selon un autre mode de réalisation, le fluide caloporteur est en circulation, ou est mis en circulation, au cours de l'étape de confirmation.

Avantageusement, au cours de l'étape de confirmation :
∘ le dispositif thermodynamique est actif pendant un laps de temps défini,
∘ une pluralité de nouvelles vérifications sont réalisées au cours du laps de temps de sorte que si l'une des nouvelles vérifications entraîne la détection d'un état fonctionnel, l'état défaillant détecté est invalidé, et si au terme du laps de temps l'état détecté est toujours défaillant, ce dernier est validé.

Selon une mise en oeuvre, si l'état défaillant est validé, une étape de mémorisation dans une mémoire de l'état défaillant du dispositif thermodynamique est réalisée de sorte à inhiber une activation ultérieure d'un des modes de fonctionnement du dispositif thermodynamique. En outre le procédé peut comporter une étape d'effacement au cours de laquelle la mémoire est effacée si la pression du fluide caloporteur évolue de sorte à passer, après l'étape de mémorisation et en fonction du premier seuil et/ou du second seuil, dans un domaine représentatif d'un état fonctionnel du dispositif thermodynamique.

De préférence, au cours de l'étape de vérification initiale l'état fonctionnel correspond à une valeur de la première mesure de pression supérieure au premier seuil, et l'état défaillant correspond à une valeur de la première mesure de pression inférieure au premier seuil.

De préférence, au cours de chaque nouvelle vérification l'état fonctionnel correspond à une valeur de la seconde mesure de pression supérieure au second seuil, et l'état défaillant validé correspond à une valeur de la seconde mesure de pression inférieure au second seuil.

Avantageusement, le premier seuil et le second seuil sont représentatifs d'une valeur identique de pression du fluide caloporteur.

De manière avantageuse, une nouvelle vérification de l'étape de confirmation est réalisée uniquement si une température de référence extérieure au dispositif thermodynamique est inférieure à une température seuil. Avantageusement, une étape de mémorisation dans une mémoire de l'état défaillant validé du dispositif thermodynamique est réalisée de sorte à inhiber une activation ultérieure d'un des modes de fonctionnement du dispositif thermodynamique si la température de référence extérieure est supérieure à la température seuil, et qu'un état défaillant est détecté au cours de l'étape de vérification initiale. De préférence, la température seuil est une température négative.

Selon une mise en oeuvre particulière, le dispositif thermodynamique comporte un premier ensemble de modes comprenant un mode chauffage et avantageusement un mode dégivrage du dispositif thermodynamique, et un second ensemble de modes comprenant un mode climatisation et un avantageusement un mode déshumidification, les premier et second ensembles étant associés respectivement à des premiers et/ou seconds seuils de pression distincts en fonction du mode voulu de fonctionnement.

En fait, l'état défaillant validé lors de l'étape de confirmation peut correspondre à une fuite de fluide caloporteur du circuit du fluide caloporteur, ou une quantité insuffisante de fluide caloporteur dans ledit circuit du fluide caloporteur.

De manière avantageuse, la pression du fluide caloporteur est augmentée volontairement au cours de l'étape de confirmation.

L'invention est aussi relative à un système pour véhicule de type automobile comprenant un dispositif thermodynamique comportant un circuit de fluide caloporteur, un élément de vérification configuré pour détecter un état fonctionnel ou un état défaillant au niveau du circuit du fluide caloporteur, et un élément de confirmation configuré pour confirmer un état défaillant après sa détection par l'élément de vérification.

Avantageusement, le système comporte une unité de contrôle configurée pour mettre en oeuvre le procédé de gestion.

Selon une réalisation particulière, le système peut comporter un compresseur agissant sur le fluide caloporteur pour le faire circuler dans le circuit de fluide caloporteur.

L'invention est aussi relative à un support d'enregistrement de données lisible par un calculateur, sur lequel est enregistré un programme informatique comprenant des moyens de codes de programme informatique de mise en oeuvre des étapes du procédé de gestion.

L'invention est aussi relative à un programme informatique comprenant un moyen de codes de programme informatique adapté à la réalisation des étapes du procédé de gestion lorsque le programme est exécuté par un calculateur.

Enfin l'invention est aussi relative à un véhicule incorporant ledit système. Le dispositif thermodynamique est alors avantageusement configuré pour agir sur le confort dans l'habitacle du véhicule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre un diagramme simplifié de fonctionnement du procédé de gestion,
- la figure 2 représente un graphique logarithmique de la pression en fonction de l'enthalpie massique pour un fluide de type HFO1324yf,
- la figure 3 illustre une réalisation particulière de l'étape E2 de la figure 1,
- la figure 4 illustre un diagramme complet d'un mode de fonctionnement optimisé du procédé de gestion,
- la figure 5 illustre schématiquement un système comprenant un dispositif thermodynamique pour véhicule automobile.

### Description de modes préférentiels de l'invention

Après différents tests, il a été déterminé que les types de problèmes visés dans l'art antérieur avaient tendance à se produire lorsque les températures extérieures étaient relativement basses. En effet, le seuil spécifique de basse pression est généralement déterminé pour détecter une fuite jusqu'à des températures proches de 0°C. Cependant, pour des températures négatives plus importantes, et lorsque la quantité du fluide est identique à la quantité initiale, ou très faiblement diminuée, la pression du fluide à cette température négative peut être inférieure au seuil précité ci-dessus, et ainsi déclencher une fausse détection de manque de fluide.

Ainsi, il a été développé un procédé de gestion d'un dispositif thermodynamique pour véhicule automobile. De préférence le dispositif thermodynamique est de type pompe à chaleur. Le dispositif thermodynamique comporte un circuit de fluide caloporteur, et permettant de vérifier également dans ces circonstances l'état du dispositif thermodynamique.

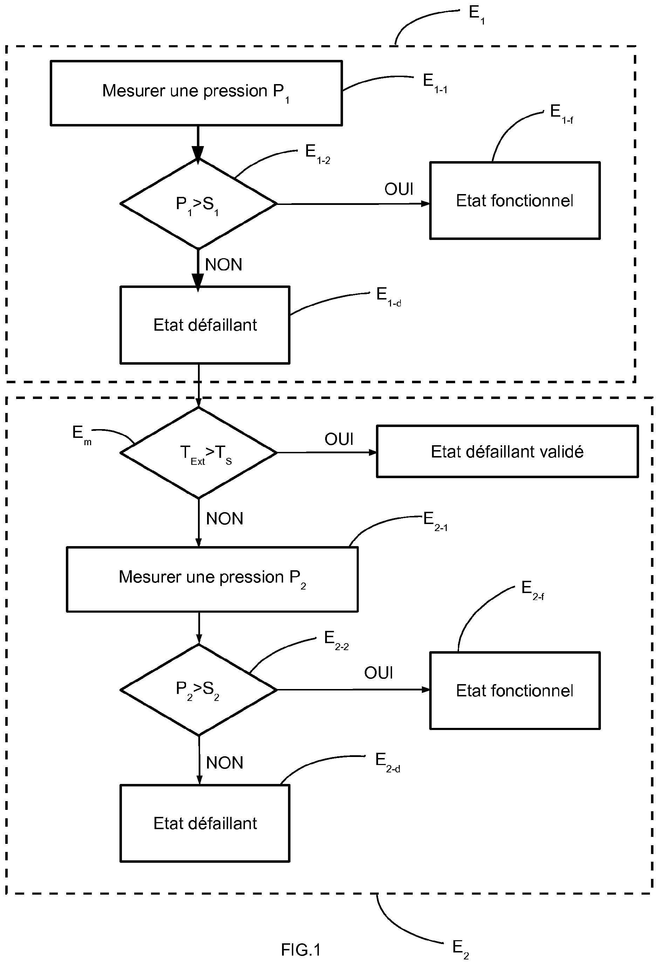

Sur la figure 1, ce procédé comprend, comme dans l'art antérieur une étape de vérification initiale E1 dans laquelle un état fonctionnel E1-f ou un état défaillant E1-d au niveau du circuit du fluide caloporteur est détecté en fonction d'une première mesure E1-1 de pression P1 dudit fluide et de sa comparaison E1-2 à un premier seuil S1.

Avantageusement, au cours de l'étape de vérification initiale E1 l'état fonctionnel E1-f correspond à une valeur de la première mesure de pression P1 supérieure au premier seuil S1 (sortie OUI de E1-2), et l'état défaillant E1-d correspond à une valeur de la première mesure de pression P1 inférieure au premier seuil S1 (sortie NON de E1-2).

En outre, selon l'invention, le procédé comporte, après l'étape de vérification initiale E1 au cours de laquelle un état défaillant E1-d a été détecté (sortie NON de E1-2), une étape de confirmation E2 de l'état défaillant E1-d au cours de laquelle une nouvelle vérification est effectuée par réalisation d'une seconde mesure E2-1 de pression P2 et sa comparaison E2-2 à un second seuil S2. Avantageusement, au cours de l'étape de confirmation E2, la pression du fluide est volontairement augmentée. L'étape de confirmation E2 peut comporter une ou plusieurs nouvelles vérifications, autrement dit, si l'état défaillant est validé dans l'étape E2-d (sortie NON de E2-2), le procédé peut boucler au moins une fois au début de l'étape de confirmation E2.

En fait, chaque nouvelle vérification permet de valider ou d'invalider l'état précédemment détecté de défaillance. Ceci permet à la logique fonctionnelle d'un véhicule, équipé du dispositif thermodynamique et du procédé, de ne pas inhiber la fonction du dispositif thermodynamique sans au moins avoir fait une vérification supplémentaire. En fait, l'état défaillant validé lors de l'étape de confirmation peut correspondre à une fuite de fluide caloporteur du circuit du fluide caloporteur, ou une quantité insuffisante de fluide caloporteur dans ledit circuit du fluide caloporteur.

Au cours de chaque nouvelle vérification (dans l'étape E2), l'état fonctionnel E2-f correspond, préférentiellement, à une valeur de la seconde mesure de pression P2 supérieure au second seuil S2 (sortie OUI de E2-2), et l'état défaillant validé E2-d correspond à une valeur de la seconde mesure de pression inférieure au second seuil S2 (sortie NON de E2-2).

Le premier seuil S1 et le second seuil S2 peuvent être représentatifs d'une valeur identique ou différente de pression du fluide caloporteur.

On comprend de ce qui a été dit ci-dessus que les probabilités de discriminer une erreur de diagnostic sont améliorées.

L'étude comportementale du dispositif associée à des diagnostics réalisés par erreur au cours d'une unique étape initiale comme dans l'art antérieur a démontré que sur un véhicule équipé d'une pompe à chaleur, la pression de saturation du fluide caloporteur au repos correspond à la température extérieure correspondant sensiblement à la température ambiante. Par « repos », on entend que le fluide est dans un état stabilisé et que le dispositif thermodynamique est dans un état arrêté. A très basse température ambiante, suivant le type de fluide utilisé, par exemple de type R134a ou HOF1234yf, la pression du fluide caloporteur est inférieure au seuil de pression que le système utilise usuellement pour identifier une trop faible quantité ou une fuite de fluide caloporteur.

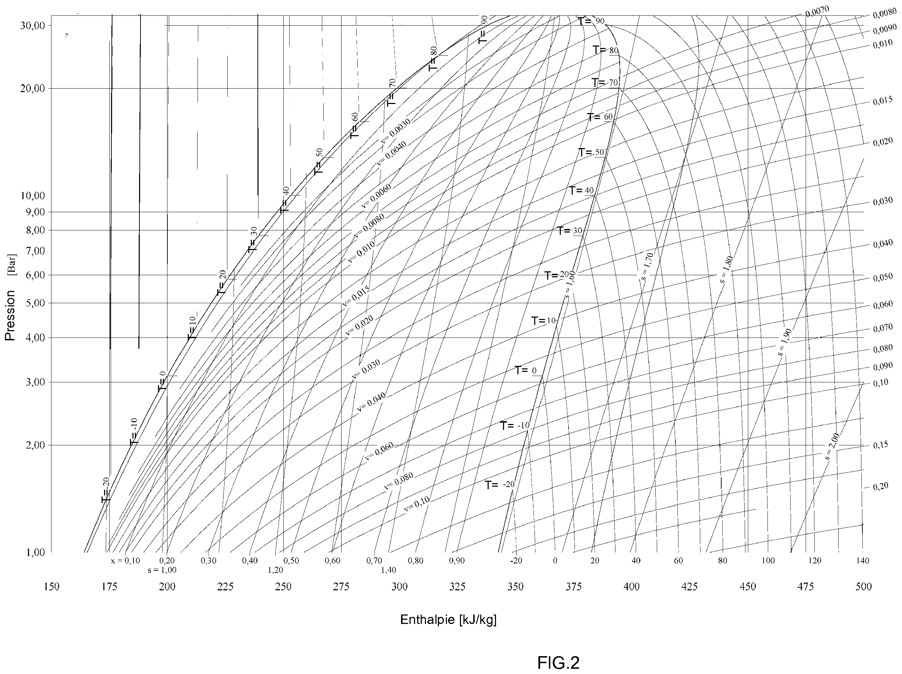

Cette étude comportementale est vérifiée de manière pratique par l'étude de la propriété d'un fluide caloporteur et de sa quantité au sein d'un circuit de fluide. La figure 2 illustre un graphique logarithmique de la pression (en Bar) en fonction de l'enthalpie massique (en KJ/kg) pour un fluide de type HFO1324yf. Elle permet de mettre en avant les caractéristiques du fluide à différentes température T en °C, à des valeurs s exprimées en kJ/(kg K°) correspondant à des lignes d'isentropies, et à des valeurs v de volume massique exprimées en m³/kg. Dans la zone de vapeur humide et dans la zone de surchauffe on trouve les Isentropes. Ce sont des lignes de même entropie. L'augmentation d'entropie est une mesure pour les pertes de chaleur ayant lieu pendant les processus techniques C'est une grandeur calorique comme l'enthalpie, et a une valeur déterminée à chaque état. La grandeur absolue n'est pas définie. Elle est calculée à partir d'un point arbitraire, le plus souvent à partir de l'état normal (pour le R12: O°C). L'unité de l'entropie est kJ/kg K. Les isentropes sont surtout dans la zone de la vapeur surchauffée d'une grande utilité pour le spécialiste du froid. Suivant ces lignes de même entropie s'effectue la compression dans un compresseur idéal, donc sans pertes. Les isentropes permettent alors de déterminer le travail de compression idéale (théorique) P par kg de fluide frigorigène en comparant l'enthalpie initiale et finale (après la compression). Cela permet de tirer des conclusions sur la puissance réellement absorbée par le compresseur.

Ainsi, l'analyse de la figure 2 permet de mettre en avant les résultats suivants :
- si la température extérieure au circuit du fluide est de 0°C, la pression, aussi appelée pression de saturation, du fluide caloporteur est d'environ 3,1bar, correspondant à la valeur nominale de la pression dans le circuit de fluide caloporteur (aussi appelée dans le domaine pression dans la boucle). Une sous quantité de fluide peut induire une pression absolue de 2,5bar, voire 2bar. Une forte fuite engendrera une pression identique à l'extérieur, soit usuellement 1,1bar. Ainsi, pour un dispositif thermodynamique destiné uniquement à réaliser une fonction de climatisation, c'est-à-dire « faire du froid », et limité à la température extérieure de 0°C, un seuil de pression absolue minimale pour détection d'une faible quantité de fluide caloporteur (dans l'exemple particulier appelé réfrigérant) doit être inférieur à 3,1 bar.
- si la température extérieure au circuit du fluide est de -10°C, la pression de saturation du fluide est d'environ 2,2bar, correspondant à la valeur nominale de la pression dans la boucle. Une sous quantité de fluide peut induire une pression absolue de 2bar, voire1,5bar. Une forte fuite engendrera une pression identique à l'extérieur, soit usuellement 1,1bar. Ainsi, pour les systèmes de climatisation avec mode pompe à chaleur fonctionnant jusqu'à -10°C de température extérieure, un seuil de pression absolue minimale pour détection d'une faible quantité de réfrigérant doit être inférieur à 2,2bar.

- Si la température extérieure est de -20°C, la pression de saturation du fluide est d'environ 1,5bar, correspondant à la valeur nominale de la pression dans la boucle. Une sous quantité de fluide peut induire une pression absolue de 1,3bar ou 1,2bar par exemple. Une forte fuite engendrera une pression identique à l'extérieur, soit usuellement 1,1bar. Pour un dispositif thermodynamique avec mode pompe à chaleur fonctionnant par exemple jusqu'à -20°C de température extérieure, un seuil de pression absolue minimale pour détection d'une faible quantité de réfrigérant doit être inférieur à 1,5bar.

Cependant, le seuil de pression utilisé pour détecter un état défaillant ne doit pas être trop bas, car plus le seuil de pression est bas, moins le système détectera de cas de faible charge. Par exemple, si le seuil de pression est de 1,7bar, c'est largement au-dessous de la pression de saturation à 0°C, donc à 0°C aucun cas de faible quantité de charge avec pression supérieure à 1,7bar ne sera détecté. Or, pour la durabilité du dispositif thermodynamique et sa performance associée (puissance thermique, consommation), il est important que le niveau de quantité de fluide soit suffisant lors de son fonctionnement.

A noter également que le seuil de pression utilisé lors de la comparaison ne doit non plus pas être trop bas. En effet, le procédé doit pouvoir clairement distinguer les cas de défaillance d'un capteur de mesure de pression, par exemple un court-circuit, et les cas de détection de très faible pression, de par la technologie de mesure et de liaison capteur - calculateur, et ensuite pour couvrir la marge d'erreur de la détection de la pression (diversité du capteur, influence des conditions extérieures sur la mesure, diversité du voltage, erreur de la reconstitution mesure - valeur au sein du calculateur, etc.).

Il résulte de ce qui a été dit, que lors d'un démarrage ou d'une initialisation d'un système à froid, la température du fluide caloporteur est sensiblement égale à celle de la température ambiante ce qui peut en application de l'équation des gaz parfaits induire une pression très basse de fluide dans le circuit alors que la quantité de fluide est suffisante. Cela limite grandement le domaine de fonctionnement de la pompe à chaleur à une température minimale (d'environ -10°C ou -15°C suivant les seuils actuels parmi les plus bas).

Ainsi, dans un premier mode de réalisation, il est possible, en combinaison avec les étapes de procédé décrites ci-avant, d'échauffer le fluide caloporteur échauffé au cours de l'étape de confirmation, de préférence avant la réalisation de la nouvelle étape de vérification. Cet échauffement induit l'augmentation volontaire de la pression du fluide caloporteur telle que visée ci-dessus. Cet échauffement peut être réalisé par un apport de calories suffisant pour remonter la température du fluide caloporteur à une température de fonctionnement normale. Si à cette température de fonctionnement normale la pression n'est toujours pas satisfaisante, alors l'état défaillant est validé, et inversement l'état défaillant peut être invalidé de sorte que le dispositif thermodynamique passe dans un état fonctionnel. Cet échauffement peut être réalisé par tout élément idoine connu de l'homme du métier, mettant par exemple en oeuvre une résistance thermique. Selon un exemple particulier mettant en oeuvre le réchauffement, il peut être possible de réchauffer la totalité du fluide, en agissant soit sur toute la boucle sans mouvement du fluide (i.e en implantant une ou des résistance(s) tout au long du parcours du fluide), soit sur une partie de la boucle (résistance disposée localement par exemple) mais en faisant transiter un certain temps le fluide pour qu'il se réchauffe de manière homogène. Dans le deuxième cas, il faut trouver un moyen de faire transiter le fluide sans trop utiliser le compresseur qu'on veut justement protéger, ainsi il est possible d'ajouter une pompe dédiée de circulation du fluide, ou de mettre en route le compresseur à très faible régime en positionnant des vannes de manière à ce qu'il n'y ait pas de détente, (c'est-à-dire limiter la compression du fluide caloporteur).

A noter que le procédé nécessite préférentiellement une bonne isolation de la totalité des composants de la boucle du circuit du fluide caloporteur, en premier lieu les tuyaux.

Selon un second mode de réalisation le fluide caloporteur est en circulation, ou est mis en circulation, au cours de l'étape de confirmation. Cette circulation peut être réalisée par la mise en route d'un compresseur associé au circuit de fluide caloporteur, et réalisant ainsi l'augmentation volontaire de la pression du fluide. Dès lors le compresseur vient comprimer le fluide de sorte que ce dernier atteigne une pression plus importante que sa pression initiale. L'étape de vérification est alors dite dynamique.

De manière avantageuse, au cours de l'étape de confirmation E2, le dispositif thermodynamique est actif pendant un laps de temps défini, et une pluralité de nouvelles vérifications sont réalisées au cours du laps de temps de sorte que si l'une des nouvelles vérifications entraîne la détection d'un état fonctionnel, l'état défaillant détecté est invalidé, et si au terme du laps de temps l'état détecté est toujours défaillant, ce dernier est validé. Cette activation permet, par exemple, de mettre en circulation le fluide caloporteur notamment par mise en route du compresseur, cette activation peut avoir lieu avant, ou au cours de, la nouvelle vérification pendant l'étape de confirmation.

Ainsi, dans l'étape de confirmation, le fonctionnement du dispositif thermodynamique est autorisé, par exemple à basse température, même si la pression est très faible, et ce durant un temps minimum suffisant, correspondant au laps de temps, dans lequel, si la pression mesurée perdure en deçà d'un certain seuil, le procédé inhibe le fonctionnement du dispositif thermodynamique, c'est-à-dire par exemple en arrêtant le compresseur. Ceci procure l'avantage d'éviter de systématiquement inhiber le dispositif thermodynamique si la température extérieure est basse et qu'il n'y a pas de défaut de fluide. Par « température basse », on entend une température selon laquelle il n'est pas possible de savoir si le circuit de fluide caloporteur est en défaut ou non, cette température dépend donc du fluide choisi. L'homme du métier confronté à la problématique et à la solution énoncées ci-dessus pourra alors comprendre à quoi correspond une « température basse ».

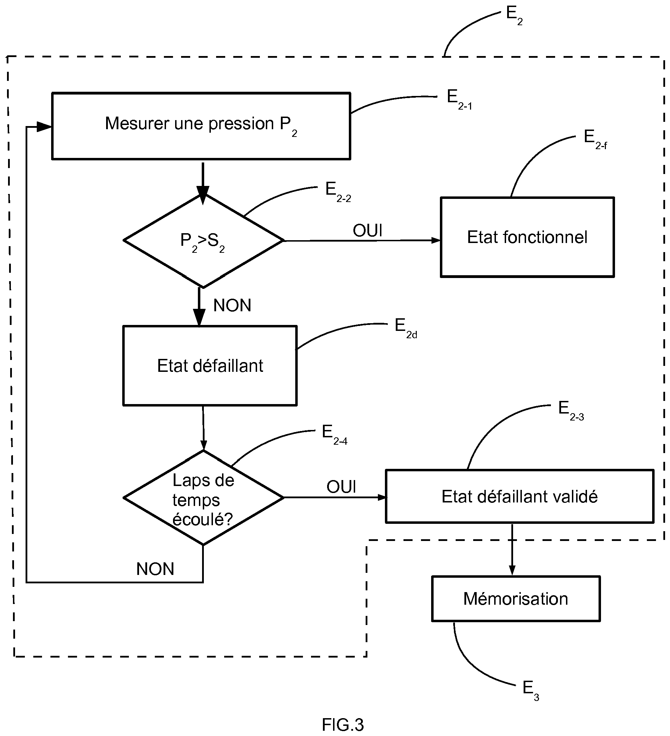

La figure 3 illustre plus en détail l'étape E2 de la figure 1 en reprenant les mêmes éléments et en les visant par de mêmes références. Sur cette figure 3 après mesure de la pression P2 (étape E2-1) et détection d'un état défaillant E2d, consécutivement à l'étape E2-2 si, avantageusement, au terme d'un laps de temps (sortie OUI de l'étape E2-4), l'état défaillant est toujours présent alors il est validé E2-3 (par exemple à la fin de l'étape E2), Dans le cas où le laps de temps n'est pas mis en oeuvre, l'état défaillant peut être validé directement lors de sa première détection au cours de l'étape E2 de confirmation.

De manière générale, une étape de mémorisation E3 dans une mémoire de l'état défaillant validé du dispositif thermodynamique est réalisée de sorte à inhiber une activation ultérieure d'un des modes de fonctionnement du dispositif thermodynamique. Cette étape de mémorisation comporte un avantage dans le cadre où, si un état défaillant validé E2-3 est enregistré dans la mémoire ceci permet d'éviter un nouveau test similaire. Ainsi, avant même la réalisation de l'étape de vérification initiale, ou avant l'étape de confirmation, il est possible de vérifier le contenu de la mémoire, et d'inhiber directement un fonctionnement ultérieur. Ceci à l'avantage de sauvegarder l'intégrité des éléments mettant en oeuvre la circulation du fluide, par exemple le compresseur. En outre, sur la figure 3, en cas de nouvelle détection d'un état défaillant dans l'étape E2d et en combinaison avec la notion de laps de temps, une étape E2-4 est réalisée pour tester si le laps de temps est écoulé, si OUI l'état défaillant est validé (étape E2-3), si NON alors le procédé boucle en revenant à l'étape E2-1, où une nouvelle mesure de pression P2 est effectuée.

Selon une réalisation particulière associée à l'étape de mémorisation, le procédé peut en outre comporter une étape d'effacement au cours de laquelle la mémoire est effacée si la pression du fluide caloporteur évolue de sorte à passer, après l'étape de mémorisation et en fonction du premier seuil et/ou du second seuil, dans un domaine représentatif d'un état fonctionnel du dispositif thermodynamique. Ceci à l'avantage de ne pas nécessiter d'intervention spécifique du service après-vente pour effacer cette mémorisation si le seuil redevient acceptable, ou après un ajustement de la quantité de fluide et/ou une réparation d'une éventuelle fuite de fluide.

Afin d'améliorer le procédé, une nouvelle vérification dans l'étape de confirmation E2 de la figure 1 est réalisée uniquement si une température de référence extérieure Text au dispositif thermodynamique est inférieure à une température seuil Ts (figure 1). Autrement dit, sur détection d'un état défaillant E1-d, il peut y avoir, au cours de l'étape E2, et de préférence immédiatement consécutivement à l'invocation de l'étape E2, une étape de mesure Em de la température extérieure Text et de comparaison à un seuil Ts de sorte que si la température extérieure Text est supérieure au seuil Ts alors il est considéré que la température ne devrait pas avoir d'influence négative sur la détection de l'état, dès lors l'état défaillant est directement validé en sortie OUI de l'étape Em. En sortie NON de l'étape Em, l'étape E2 de confirmation est réalisée comme décrit précédemment.

Pour les mêmes raisons avantageuses que décrites précédemment lors de l'étape de mémorisation E3 de la figure 3, si la température de référence extérieure Text est supérieure à la température seuil Ts (étape Em) et qu'un état défaillant est détecté au cours de l'étape de vérification initiale (E1) l'état défaillant validé en sortie OUI de l'étape Em est mémorisé dans une mémoire de sorte à inhiber une activation ultérieure d'un des modes de fonctionnement du dispositif thermodynamique.

Généralement, la température seuil Ts est une température négative. Cependant, sa valeur sera adaptée en fonction du type de fluide caloporteur utilisé, et pourra donc être aussi positive.

De manière générale, le dispositif thermodynamique comporte d'une part un premier ensemble de modes comprenant un mode chauffage, et avantageusement un mode dégivrage du dispositif thermodynamique, et d'autre part un second ensemble de modes comprenant un mode climatisation et avantageusement un mode déshumidification, les premier et second ensembles étant associés respectivement à des premiers et/ou seconds seuils de pression distincts en fonction du mode voulu de fonctionnement. Avantageusement, chaque mode de fonctionnement pourra être inhibé sélectivement, ou plusieurs modes de fonctionnement pourront être inhibés sur la détection d'un état défaillant validé. En fait, en fonction du mode choisi, le circuit du fluide peut s'adapter (par exemple être plus court en isolant certaines parties), dès lors avoir des seuils de valeurs différentes prend tout son sens.

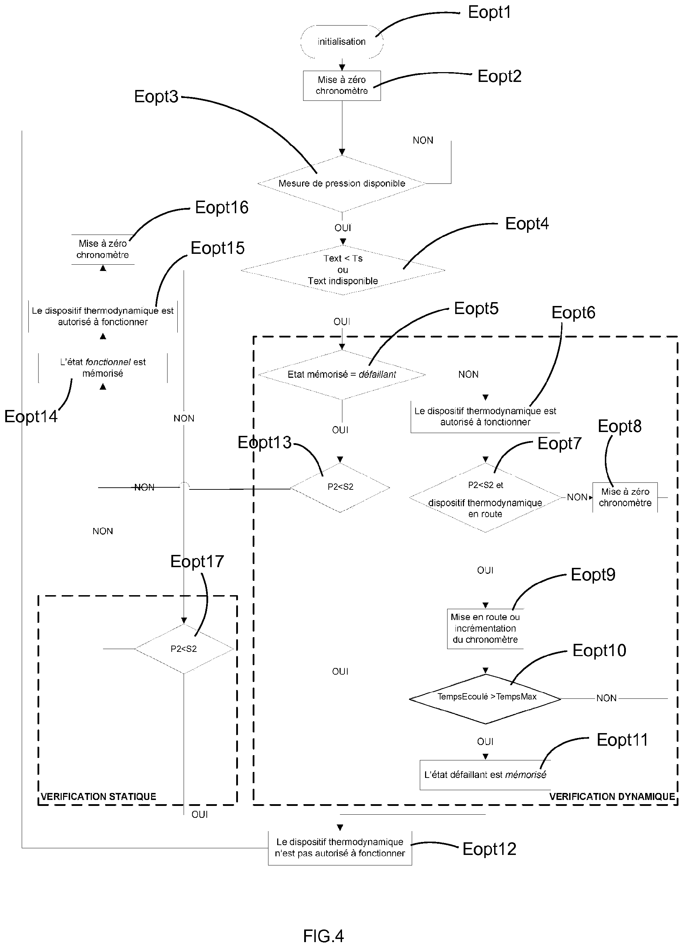

De manière préférentielle et optimisée, le procédé de gestion correspond à celui illustré à la figure 4. Ainsi, il peut comprendre initialement une étape Eopt1. L'étape Eopt1 est suivie de la mise à zéro d'un chronomètre dans une étape Eopt2. Consécutivement à l'étape Eopt2, une étape Eopt3 permet de vérifier si la mesure de pression est disponible, si elle ne l'est pas (sortie NON) alors l'étape Eopt3 boucle sur elle-même, et si elle est disponible (sortie OUI) alors un test de la température extérieure Text est réalisé dans une étape Eopt4. L'étape Eopt3 peut avantageusement réaliser l'étape E1 telle que décrite ci-avant. Ce test correspond à vérifier si la température extérieure Text est inférieure à un seuil Ts ou si la température extérieure Text n'est pas disponible. En sortie OUI on vérifie, dans une étape Eopt5 l'état d'un paramètre de la mémoire contenant la valeur d'une variable d'un état fonctionnel ou défaillant validé au préalable. Si dans l'étape Eopt5 l'état mémorisé n'est pas défaillant (sortie NON) alors le dispositif thermodynamique est mis en route (étape Eopt6), par exemple en faisant circuler le fluide en enclenchant le compresseur. Consécutivement à la mise en route dans l'étape Eopt6, la pression P2 du fluide caloporteur est mesurée à nouveau et revérifiée par comparaison avec le seuil S2, avantageusement avec un test sur le fonctionnement du dispositif thermodynamique pour s'assurer que le dispositif thermodynamique fonctionne bien, dans une étape Eopt7. Si la pression P2 est supérieure au seuil S2 associé, ou avantageusement si le dispositif thermodynamique ne fonctionne pas, alors le chronomètre est remis à zéro à l'étape Eopt8. En sortie OUI de l'étape Eopt7 (P2 inférieur à S2, et avantageusement la mise en route du dispositif thermodynamique est confirmée) alors le chronomètre est mis en route, ou mis à jour si déjà en route dans, une étape Eopt9. Consécutivement à l'étape Eopt9, la valeur associée au temps écoulé TempsEcoulé du chronomètre est comparée à un temps maximum TempsMax (Etape Eopt10) de sorte que si le TempsEcoulé est supérieur à TempsMax alors la mémoire est mise à jour et l'état défaillant validé y est inscrit (Etape Eopt11) puis l'étape Eopt12, dans laquelle le fonctionnement du dispositif thermodynamique dans au moins un de ses modes est interdit, est réalisée. Si le TempsEcoulé est inférieur au TempsMax alors le procédé repasse à l'étape Eopt3. En sortie OUI de l'étape Eopt5, c'est-à-dire dans le cas où la mémoire indiquait déjà un état défaillant, un nouveau test de la pression est réalisé par une nouvelle mesure de pression P2 et la comparaison de cette mesure au seuil S2 (Eopt13). Si la pression P2 nouvellement mesurée est toujours inférieure au seuil S2 (sortie OUI) alors le fonctionnement du dispositif thermodynamique, dans au moins un de ses modes est interdit en passant à l'étape Eopt12. Si au cours de la vérification de l'étape Eopt13 la pression P2 est supérieure au seuil (sortie NON de Eopt13) alors l'état de la mémoire passe à fonctionnel (étape Eopt14) puis le dispositif thermodynamique est autorisé à fonctionner dans l'étape Eopt15 consécutive à l'étape Eopt14, puis le chronomètre est, le cas échéant remis à zéro dans une étape Eopt16. Par ailleurs, en sortie NON de l'étape Eopt4 (dans le cas où la température extérieure est supérieure à la température de seuil Ts alors un test statique est réalisé (étape Eopt17) dans lequel la pression P2 est nouvellement mesurée et comparée au seuil S2, si la pression P2 est inférieure au seuil S2 alors l'étape Eopt12 est réalisée, sinon les étapes Eopt14, Eopt15, Eopt16 sont consécutivement réalisée.

En sortie des étapes Eopt8, Eopt12 et Eopt16, le procédé retourne à l'étape Eopt3.

L'étape Eopt17 fait partie d'un test dit statique, et les étapes Eopt5-6-7-8-9-10-11-13 font parties d'un test dit dynamique.

La mise en route du dispositif thermodynamique, par exemple via le compresseur, peut être réalisée par des commandes appliquées au compresseur pour un ou plusieurs modes de fonctionnement de la pompe à chaleur. Les commandes peuvent être mises en oeuvre notamment au niveau des étapes Eopt12 et Eopt15 par un paramètre associé à ces étapes, et pouvant regrouper à la fois l'inhibition due à une détection dynamique de basse pression ou une inhibition due à la détection statique.

De manière générale, la comparaison de la température extérieure à un seuil permet au cours de l'étape de confirmation soit de réaliser une simple nouvelle vérification comprenant une nouvelle mesure de pression et une nouvelle comparaison (si la température mesurée est supérieure au seuil). Soit, si la température extérieure est inférieure au seuil, de réaliser une nouvelle vérification de type dynamique, c'est-à-dire au cours de laquelle la pression du fluide est volontairement augmentée (par exemple par réchauffage, ou mise en route du compresseur).

Le paramètre correspondant à l'état fonctionnel ou défaillant validé peut être utilisé pour inhiber le fonctionnement de la pompe à chaleur :
- Soit en agissant sur la commande du compresseur en la forçant à 0 pour un ou plusieurs modes de pompe à chaleur
- Soit en agissant sur le mode de pompe à chaleur non autorisé (soit un mode non autorisé, soit plusieurs modes non autorisés, soit aucun mode autorisé)
- Soit en agissant sur les deux.

Selon une variante applicable à tout ce qui a été dit précédemment et dérivable de la figure 4, le seuil de pression utilisé dans les étapes de comparaison peut être fonction de la température extérieure. Ainsi, le procédé peut en outre comprendre une étape de détermination du premier seuil de pression avantageusement associé à une vérification statique et/ou du second seuil de pression avantageusement associé à une vérification dynamique en fonction d'une mesure de température extérieure. Cette étape de détermination pourra par exemple être réalisée une première fois à l'initialisation du procédé avant l'étape de vérification initiale, ou, avantageusement, pourra être appliquée tout au long de l'utilisation du dispositif afin d'adapter les seuils de pression à la température extérieure. Un autre avantage de ces seuils fonction de la température extérieure est par exemple de rendre homogène le niveau de charge du fluide en-dessous duquel le procédé inhibe le système, quelle que soit la température extérieure (en effet, par exemple une perte d'une même quantité de fluide peut correspondre, à 0°C de température ambiante à une pression de 2,5bar, et à -10°C de température ambiante à une pression inférieure).

Dans le présent procédé, les seuils de pression, et le cas échéant de température, peuvent intégrer une hystérésis dans la logique de fonctionnement. Le laps de temps, les seuils de pression, de température et le régime de fonctionnement du compresseur peuvent être calibrés, et être spécifiques à chacun des modes du système.
Par exemple, l'hystérésis sur la température permet d'éviter, lorsque la température ambiante oscille autour du seuil associé, que le système passe tantôt par la détection statique et tantôt par la détection dynamique, ce qui aurait pour conséquence par exemple de faire tourner le compresseur pendant quelques secondes (quand Text < Ts), puis de l'arrêter (quand Text > Ts), remettant à zéro le chronomètre, puis de le réautoriser (quand Text > Ts), etc. Ainsi la condition sur la température utilise deux seuils Ts1 et Ts2, avec Ts1 > Ts2 selon la logique suivante : si Ts > Ts2, alors le seuil est Ts2 ; si ensuite Ts < Ts2, alors le seuil devient Ts1 ; et inversement. Le même principe s'applique dans le cadre d'une hystérésis sur la pression où on aurait dans ce cas deux seuils de pression utilisés de manière similaire.

Le procédé peut également autoriser une ou plusieurs étapes de vérification dynamique après son initialisation et aux initialisations suivantes (ou à la prochaine demande du mode nécessitant une détection dynamique), tant qu'un certain nombre de vérifications en dynamique ne dépasse pas un seuil spécifique. Ce nombre pourra être remis à zéro à l'initialisation suivante du système, ou bien au même moment que la mémorisation à l'état fonctionnel.

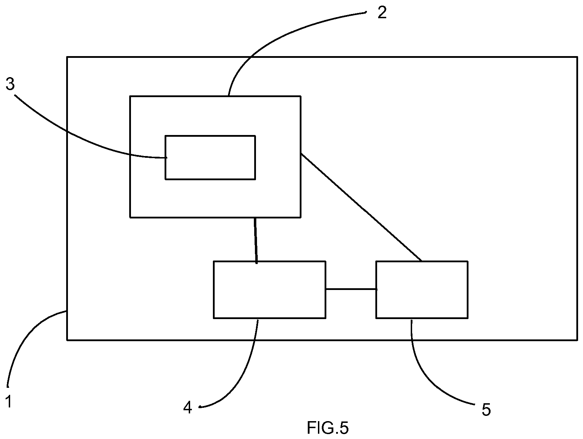

Le dispositif peut être installé dans un système pour véhicule de type automobile illustré à la figure 5. Un tel système 1 comprend un dispositif thermodynamique 2, de type pompe à chaleur, comportant un circuit de fluide caloporteur 3, un élément de vérification 4 configuré pour détecter un état fonctionnel ou un état défaillant au niveau du circuit du fluide caloporteur 3. Le système comporte en outre un élément de confirmation configuré 5 pour confirmer un état défaillant après sa détection par l'élément de vérification. Le dispositif thermodynamique 2 peut également être d'un autre type que la pompe à chaleur, du moment qu'il contient un mode nécessitant d'être fonctionnel à une température ambiante telle que la pression de saturation du fluide à cette température est proche ou inférieure au seuil de détection de bas niveau de charge adéquat pour une température plus élevée, ou adéquat pour un autre de ses modes.

Le système peut comporter une unité de contrôle configurée pour mettre en oeuvre le procédé tel que décrit précédemment dans ses différentes variantes, ainsi les différentes étapes peuvent être réalisées par des éléments configurés de manière idoine pour réaliser lesdites étapes.

Le système peut comporter un compresseur agissant sur le fluide caloporteur pour le faire circuler dans le circuit de fluide caloporteur. Les autres éléments constitutifs de la pompe à chaleur, bien connus de l'homme du métier ne seront pas décrits.

En outre un support d'enregistrement de données lisible par un ou plusieurs calculateur(s), sur lequel est enregistré un programme informatique peut comprendre des moyens de codes de programme informatique de mise en oeuvre des étapes du procédé de gestion.

De manière générale, le programme informatique peut comprendre un moyen de codes de programme informatique adapté à la réalisation des étapes du procédé de gestion.

Les valeurs mémorisées peuvent être accessibles à l'utilisateur ou autre personne intervenant sur le système, par exemple via un outil de diagnostic branché sur le réseau du véhicule ou sur le calculateur.

Le système pourra notamment être incorporé à un véhicule automobile, et le dispositif thermodynamique peut être configuré pour agir sur le confort dans l'habitacle du véhicule (par exemple selon les modes de fonctionnement évoqués ci-dessus).

Le système peut le cas échéant comporter un capteur de pression du fluide caloporteur et un capteur de température extérieure, dont les valeurs mesurées seront utilisées dans le procédé de gestion.

Il a été décrit ci-avant une vérification statique et une vérification dynamique, ces vérifications peuvent partager une même mémoire de stockage de l'état du dispositif ou des mémoires différentes.

## Revendications

1. Procédé de gestion d'un dispositif thermodynamique pour véhicule automobile, comportant un circuit de fluide caloporteur, ledit procédé comprenant une étape (E1) de vérification initiale dans laquelle un état fonctionnel (E1-f), ou un état défaillant (E1-d), au niveau du circuit du fluide caloporteur est détecté en fonction d'une première mesure (E1-1) de pression (P1) dudit fluide et de sa comparaison (E1-2) à un premier seuil (S1), **caractérisé en ce que** le procédé comporte, après l'étape de vérification initiale (E1) au cours de laquelle un état défaillant (E1-d) a été détecté, une étape de confirmation (E2) de l'état défaillant (E1-d) au cours de laquelle une nouvelle vérification est effectuée par réalisation d'une seconde mesure (E2-1) de pression (P2) et sa comparaison à un second seuil (S2).

2. Procédé selon la revendication 1, **caractérisé en ce que** le fluide caloporteur est échauffé au cours de l'étape de confirmation (E2)

3. Procédé selon la revendication 1, **caractérisé en ce que** le fluide caloporteur est en circulation, ou est mis en circulation, au cours de l'étape de confirmation (E2).

4. Procédé selon l'une des revendications 1 à 3, **caractérisé en ce qu'**au cours de l'étape de confirmation (E2) :
∘ le dispositif thermodynamique est actif pendant un laps de temps défini,
∘ une pluralité de nouvelles vérifications (E2-1, E2-2) sont réalisées au cours du laps de temps de sorte que si l'une des nouvelles vérifications entraîne la détection d'un état fonctionnel, l'état défaillant détecté est invalidé, (E2-f), et si au terme du laps de temps l'état détecté est toujours défaillant, ce dernier est validé (E2-3).

5. Procédé selon l'une des revendications 1 à 4, **caractérisé en ce que** si l'état défaillant est validé, une étape de mémorisation (E3) dans une mémoire de l'état défaillant (E2-3) du dispositif thermodynamique est réalisée de sorte à inhiber une activation ultérieure d'un des modes de fonctionnement du dispositif thermodynamique.

6. Procédé selon la revendication 5, **caractérisé en ce qu'**il comporte une étape d'effacement au cours de laquelle la mémoire est effacée si la pression du fluide caloporteur évolue de sorte à passer, après l'étape de mémorisation et en fonction du premier seuil (S1) et/ou du second seuil (S2), dans un domaine représentatif d'un état fonctionnel du dispositif thermodynamique.

7. Procédé selon l'une des revendications 1 à 6, **caractérisé en ce que** au cours de l'étape de vérification initiale (E1) l'état fonctionnel (E1-f) correspond à une valeur de la première mesure de pression (P1) supérieure au premier seuil (S1), et l'état défaillant (E1-d) correspond à une valeur de la première mesure de pression (P1) inférieure au premier seuil (S1).

8. Procédé selon l'une des revendications 1 à 7, **caractérisé en ce que** au cours de chaque nouvelle vérification l'état fonctionnel (E2-f) correspond à une valeur de la seconde mesure de pression (P2) supérieure au second seuil (S2), et l'état défaillant (E2-f, E2-3) validé correspond à une valeur de la seconde mesure de pression (P2) inférieure au second seuil (S2).

9. Procédé selon les revendications 7 et 8, **caractérisé en ce que** le premier seuil (S1) et le second seuil (S2) sont représentatifs d'une valeur identique de pression du fluide caloporteur.

10. Procédé selon l'une quelconque des revendications 1 à 9, **caractérisé en ce qu'**une nouvelle vérification de l'étape de confirmation (E2) est réalisée uniquement si (Em) une température de référence extérieure (Text) au dispositif thermodynamique est inférieure à une température seuil (Ts).

11. Procédé selon la revendication 10, **caractérisé en ce qu'**une étape de mémorisation (E3) dans une mémoire de l'état défaillant validé (E2-3) du dispositif thermodynamique est réalisée de sorte à inhiber une activation ultérieure d'un des modes de fonctionnement du dispositif thermodynamique si la température de référence extérieure (Text) est supérieure à la température seuil (Ts), et qu'un état défaillant (E1-d) est détecté au cours de l'étape de vérification initiale (E1).

12. Procédé selon l'une des revendications 10 à 11, **caractérisé en ce que** la température seuil (Ts) est une température négative.

13. Procédé selon l'une quelconque des revendications 1 à 12, **caractérisé en ce que** le dispositif thermodynamique comporte un premier ensemble de modes comprenant un mode chauffage et avantageusement un mode dégivrage du dispositif thermodynamique, et un second ensemble de modes comprenant un mode climatisation et un avantageusement un mode déshumidification, les premier et second ensembles étant associés respectivement à des premiers et/ou seconds seuils de pression (S1, S2) distincts en fonction du mode voulu de fonctionnement.

14. Procédé selon l'une quelconque des revendications 1 à 13, **caractérisé en ce que** l'état défaillant validé lors de l'étape de confirmation correspond à une fuite de fluide caloporteur du circuit du fluide caloporteur, ou une quantité insuffisante de fluide caloporteur dans ledit circuit du fluide caloporteur.

15. Procédé selon l'une quelconque des revendications précédentes, **caractérisé en ce que** la pression du fluide caloporteur est augmentée volontairement au cours de l'étape de confirmation (E2)

16. Système (1) pour véhicule de type automobile comprenant un dispositif thermodynamique (2) comportant un circuit (3) de fluide caloporteur, un élément de vérification (4) configuré pour détecter un état fonctionnel ou un état défaillant au niveau du circuit du fluide caloporteur (3), **caractérisé en ce qu'**il comporte un élément de confirmation (5) configuré pour confirmer un état défaillant après sa détection par l'élément de vérification (4).

17. Système selon la revendication 16, **caractérisé en ce qu'**il comporte une unité de contrôle configurée pour mettre en oeuvre le procédé selon l'une des revendications 1 à 15.

18. Système selon l'une des revendications 16 à 17 **caractérisé en ce qu'**il comporte un compresseur agissant sur le fluide caloporteur pour le faire circuler dans le circuit de fluide caloporteur.

19. Support d'enregistrement de données lisible par un calculateur, sur lequel est enregistré un programme informatique comprenant des moyens de codes de programme informatique de mise en oeuvre des étapes d'un procédé selon l'une des revendications 1 à 15.

20. Programme informatique comprenant un moyen de codes de programme informatique adapté à la réalisation des étapes d'un procédé selon l'une des revendications 1 à 15 lorsque le programme est exécuté par un calculateur.

21. Véhicule incorporant un système selon l'une quelconque des revendications 16 à 18.

22. Véhicule selon la revendication 21, **caractérisé en ce que** le dispositif thermodynamique est configuré pour agir sur le confort dans l'habitacle du véhicule.

## Patentansprüche

1. Verfahren zur Verwaltung einer thermodynamischen Vorrichtung für ein Kraftfahrzeug, die einen Wärmeträgerfluidkreislauf aufweist, wobei das Verfahren einen anfänglichen Schritt (E1) der Überprüfung enthält, in dem ein funktionsfähiger Zustand (E1-f) oder ein defekter Zustand (E1-d) im Bereich des Wärmeträgerfluidkreislaufs abhängig von einer ersten Messung (E1-1) des Drucks (P1) des Fluids und ihrem Vergleich (E1-2) mit einer ersten Schwelle (S1) erfasst wird, **dadurch gekennzeichnet, dass** das Verfahren nach dem anfänglichen Überprüfungsschritt (E1), während dessen ein defekter Zustand (E1-d) erfasst wurde, einen Schritt der Bestätigung (E2) des defekten Zustands (E1-d) aufweist, während dessen eine neue Überprüfung durch die Durchführung einer zweiten Messung (E2-1) des Drucks (P2) und ihren Vergleich mit einer zweiten Schwelle (S2) durchgeführt wird.

2. Verfahren nach Anspruch 1, **dadurch gekennzeichnet, dass** das Wärmeträgerfluid während des Bestätigungsschritts (E2) erwärmt wird.

3. Verfahren nach Anspruch 1, **dadurch gekennzeichnet, dass** das Wärmeträgerfluid während des Bestätigungsschritts (E2) in Umlauf ist oder in Umlauf gebracht wird.

4. Verfahren nach einem der Ansprüche 1 bis 3, **dadurch gekennzeichnet, dass** während des Bestätigungsschritts (E2):
∘ die thermodynamische Vorrichtung während eines definierten Zeitraums aktiv ist,
∘ eine Vielzahl neuer Überprüfungen (E2-1, E2-2) während des Zeitraums durchgeführt wird, so dass, wenn eine der neuen Überprüfungen die Erfassung eines funktionsfähigen Zustands nach sich zieht, der erfasste defekte Zustand ungültig gemacht wird, (E2-f), und wenn während des Zeitraums der erfasste Zustand immer noch ein defekter Zustand ist, letzterer bestätigt (E2-3).

5. Verfahren nach einem der Ansprüche 1 bis 4, **dadurch gekennzeichnet, dass**, wenn der defekte Zustand gültig gemacht wird, ein Schritt des Speicherns (E3) des defekten Zustands (E2-3) der thermodynamischen Vorrichtung in einem Speicher durchgeführt wird, um eine spätere Aktivierung einer der Betriebsarten der thermodynamischen Vorrichtung zu verhindern.

6. Verfahren nach Anspruch 5, **dadurch gekennzeichnet, dass** es einen Schritt des Löschens enthält, während dessen der Speicher gelöscht wird, wenn der Druck des Wärmeträgerfluids sich so entwickelt, das er nach dem Schritt der Speicherung und abhängig von der ersten Schwelle (S1) und/oder der zweiten Schwelle (S2) in einen Bereich übergeht, der für einen funktionsfähigen Zustand der thermodynamischen Vorrichtung repräsentativ ist.

7. Verfahren nach einem der Ansprüche 1 bis 6, **dadurch gekennzeichnet, dass** während des anfänglichen Schritts der Überprüfung (E1) der funktionsfähige Zustand (E1-f) einem Wert der ersten Druckmessung (P1) höher als die erste Schwelle (S1) entspricht, und der defekte Zustand (E1-d) einem Wert der ersten Druckmessung (P1) niedriger als die erste Schwelle (S1) entspricht.

8. Verfahren nach einem der Ansprüche 1 bis 7, **dadurch gekennzeichnet, dass** während jeder neuen Überprüfung der funktionsfähige Zustand (E2-f) einem Wert der zweiten Druckmessung (P2) höher als die zweite Schwelle (S2) entspricht, und der gültig gemacht defekte Zustand (E2-f, E2-3) einem Wert der zweiten Druckmessung (P2) niedriger als die zweite Schwelle (S2) entspricht.

9. Verfahren nach den Ansprüchen 7 und 8, **dadurch gekennzeichnet, dass** die erste Schwelle (S1) und die zweite Schwelle (S2) für einen gleichen Druckwert des Wärmeträgerfluids repräsentativ sind.

10. Verfahren nach einem der Ansprüche 1 bis 9, **dadurch gekennzeichnet, dass** eine neue Überprüfung des Bestätigungsschritts (E2) nur durchgeführt wird, wenn (Em) eine Bezugstemperatur (Text) außerhalb der thermodynamischen Vorrichtung niedriger als eine Schwellentemperatur (Ts) ist.

11. Verfahren nach Anspruch 10, **dadurch gekennzeichnet, dass** ein Schritt des Speicherns (E3) des gültig gemachten defekten Zustands (E2-3) der thermodynamischen Vorrichtung in einem Speicher durchgeführt wird, um eine spätere Aktivierung einer der Betriebsarten der thermodynamischen Vorrichtung zu verhindern, wenn die äußere Bezugstemperatur (Text) höher als die Schwellentemperatur (Ts) ist und ein defekter Zustand (E1-d) während des anfänglichen Überprüfungsschritts (E1) erfasst wird.

12. Verfahren nach einem der Ansprüche 10 bis 11, **dadurch gekennzeichnet, dass** die Schwellentemperatur (Ts) eine negative Temperatur ist.

13. Verfahren nach einem der Ansprüche 1 bis 12, **dadurch gekennzeichnet, dass** die thermodynamische Vorrichtung eine erste Einheit von Betriebsarten, die einen Heizmodus und vorteilhafterweise einen Enteisungsmodus der thermodynamischen Vorrichtung enthält, und eine zweite Einheit von Betriebsarten aufweist, die einen Klimatisierungsmodus und vorteilhafterweise einen Entfeuchtungsmodus enthält, wobei die erste und die zweite Einheit je ersten und/oder zweiten unterschiedlichen Druckschwellen (S1, S2) zugeordnet sind, abhängig von der gewünschten Betriebsart.

14. Verfahren nach einem der Ansprüche 1 bis 13, **dadurch gekennzeichnet, dass** der im Bestätigungsschritt gültig gemachte defekte Zustand einem Leck von Wärmeträgerfluid des Wärmeträgerfluidkreislaufs oder einer unzureichenden Menge von Wärmeträgerfluid im Wärmeträgerfluidkreislauf entspricht.

15. Verfahren nach einem der vorhergehenden Ansprüche, **dadurch gekennzeichnet, dass** der Druck des Wärmeträgerfluids während des Bestätigungsschritts (E2) absichtlich erhöht wird.

16. System (1) für ein Fahrzeug von der Art Kraftfahrzeug, das eine thermodynamische Vorrichtung (2) enthält, die einen Kreislauf (3) von Wärmeträgerfluid und ein Überprüfungselement (4) aufweist, das konfiguriert ist, einen funktionsfähigen Zustand oder einen defekten Zustand im Bereich des Kreislaufs des Wärmeträgerfluids (3) zu erfassen, **dadurch gekennzeichnet, dass** es ein Bestätigungselement (5) aufweist, das konfiguriert ist, einen defekten Zustand nach seiner Erfassung durch das Überprüfungselement (4) zu bestätigen.

17. System nach Anspruch 16, **dadurch gekennzeichnet, dass** es ein Steuergerät aufweist, das konfiguriert ist, das Verfahren nach einem der Ansprüche 1 bis 15 durchzuführen.

18. System nach einem der Ansprüche 16 bis 17, **dadurch gekennzeichnet, dass** es einen Kompressor aufweist, der auf das Wärmeträgerfluid einwirkt, um es im Wärmeträgerfluidkreislauf umlaufen zu lassen.

19. Rechnerlesbarer Datenspeicherträger, auf dem ein EDV-Programm gespeichert ist, das EDV-Programmcode-Einrichtungen zur Durchführung der Schritte eines Verfahrens nach einem der Ansprüche 1 bis 15 enthält.

20. EDV-Programm, das eine EDV-Programmcode-Einrichtung enthält, die für die Durchführung der Schritte eines Verfahrens nach einem der Ansprüche 1 bis 15 geeignet ist, wenn das Programm von einem Rechner ausgeführt wird.

21. Fahrzeug, das ein System nach einem der Ansprüche 16 bis 18 umfasst.

22. Fahrzeug nach Anspruch 21, **dadurch gekennzeichnet, dass** die thermodynamische Vorrichtung konfiguriert ist, auf den Komfort im Innenraum des Fahrzeugs einzuwirken.

## Claims

1. Method for managing a thermodynamic device for a motor vehicle, comprising a heat-transfer fluid circuit, said method comprising an initial verification step (E1) in which a functional status (E1-f) or a defective status (E1-d) for the heat-transfer fluid circuit is detected as a function of a first measurement (E1-1) of the pressure (P1) of said fluid and the comparison (E1-2) thereof against a first threshold (S1), **characterized in that** the method comprises, after the initial verification step (E1) during which a defective status (E1-d) has been detected, a confirmation step (E2) of confirming the defective status (E1-d), during which step a further verification is carried out by performing a second measurement (E2-1) of the pressure (P2) and comparing same against a second threshold (S2).

2. Method according to Claim 1, **characterized in that** the heat-transfer fluid is heated during the confirmation step (E2).

3. Method according to Claim 1, **characterized in that** the heat-transfer fluid is circulating, or made to circulate, during the confirmation step (E2).

4. Method according to one of Claims 1 to 3, **characterized in that** during the confirmation step (E2) :
* the thermodynamic device is active for a defined time period,
* a plurality of further verifications (E2-1, E2-2) are performed during the time period so that if one of the further verifications leads to detection of a functional status, the detected defective status is invalidated, (E2-f), and if at the end of the time period the detected status is still the defective status, the latter status is validated (E2-3).

5. Method according to one of Claims 1 to 4, **characterized in that** if the defective status is validated, a memory-storage step (E3) of storing the defective status (E2-3) of the thermodynamic device in a memory is performed so as to inhibit subsequent activation of one of the modes of operation of the thermodynamic device.

6. Method according to Claim 5, **characterized in that** it comprises an erasing step during which the memory is erased if the pressure of the heat-transfer fluid changes in such a way that, after the memory-storage step and as a function of the first threshold (S1) and/or of the second threshold (S2), it enters a range indicative of the thermodynamic device having a functional status.

7. Method according to one of Claims 1 to 6, **characterized in that** during the initial verification step (E1) the functional status (E1-f) corresponds to a value for the first pressure measurement (P1) that is above the first threshold (S1), and the defective status (E1-d) corresponds to a value for the first pressure measurement (P1) that is below the first threshold (S1).

8. Method according to one of Claims 1 to 7, **characterized in that** during each further verification the functional status (E2-f) corresponds to a value for the second pressure measurement (P2) that is above the second threshold (S2), and the validated defective status (E2-f, E2-3) corresponds to a value for the second pressure measurement (P2) that is below the second threshold (S2).

9. Method according to Claims 7 and 8, **characterized in that** the first threshold (S1) and the second threshold (S2) are indicative of the same heat-transfer fluid pressure value.

10. Method according to any one of Claims 1 to 9, **characterized in that** a further verification of the confirmation step (E2) is performed only if (Em) an external reference temperature (Text) external to the thermodynamic device is below a threshold temperature (Ts).

11. Method according to Claim 10, **characterized in that** a memory-storage step (E3) of storing the validated defective status (E2-3) of the thermodynamic device in a memory is performed in such a way as to inhibit subsequent activation of one of the modes of operation of the thermodynamic device if the external reference temperature (Text) is above the threshold temperature (Ts) and if also a defective status (E1-d) is detected during the initial verification step (E1).

12. Method according to either of Claims 10 and 11, **characterized in that** the threshold temperature (Ts) is a negative temperature.

13. Method according to any one of Claims 1 to 12, **characterized in that** the thermodynamic device comprises a first set of modes comprising a heating mode and advantageously a deicing mode of the thermodynamic device, and a second set of modes comprising an air conditioning mode and advantageously a dehumidifying mode, the first and second sets being associated respectively with first and/or second pressure thresholds (S1, S2) which are distinct according to the desired mode of operation.

14. Method according to any one of Claims 1 to 13, **characterized in that** the defective status validated during the confirmation step corresponds to a leak of heat-transfer fluid from the heat-transfer fluid circuit or to an insufficient quantity of heat-transfer fluid in said heat-transfer fluid circuit.

15. Method according to any one of the preceding claims, **characterized in that** the pressure of the heat-transfer fluid is deliberately increased during the confirmation step (E2).

16. System (1) for a vehicle of the motor vehicle type, comprising a thermodynamic device (2) comprising a heat-transfer fluid circuit (3) and a verification element (4) configured to detect a functional status or a defective status of the heat-transfer fluid circuit (3), **characterized in that** it comprises a confirmation element (5) configured to confirm a defective status once the verification element (4) has detected same.

17. System according to Claim 16, **characterized in that** it comprises a control unit configured to implement the method according to one of Claims 1 to 15.

18. System according to either of Claims 16 and 17, **characterized in that** it comprises a compressor acting on the heat-transfer fluid in order to cause it to circulate through the heat-transfer fluid circuit.

19. Computer-readable data recording medium on which is recorded a computer program comprising computer program code means for implementing the steps of a method according to one of Claims 1 to 15.

20. Computer program comprising a computer program code means suited to performing the steps of a method according to one of Claims 1 to 15 when the program is executed by a computer.

21. Vehicle incorporating a system according to any one of Claims 16 to 18.

22. Vehicle according to Claim 21, **characterized in that** the thermodynamic device is configured to act on the level of comfort in the vehicle interior.
